# EUROPEAN PATENT APPLICATION

(11) **EP 2 360 513 A1**
(43) Date of publication of application: **24.08.2011**
(21) Application number: 09833265.3
(22) Date of filing: 18.09.2009
(51) Int. Cl.: G02F 1/1333, G02F 1/1337

(54) **LIQUID CRYSTAL PANEL AND LIQUID CRYSTAL DISPLAY DEVICE**

(30) Priority: 17.12.2008 JP 2008321498
(71) Applicant: Sharp Kabushiki Kaisha, Osaka-shi, Osaka 545-8522 (JP)
(72) Inventor: INOUE, Tomohiro, Osaka-shi, Osaka 545-8522 (JP)
(74) Representative: Müller - Hoffmann & Partner
(86) International application number: PCT/JP2009/066393
(87) International publication number: WO 2010/070960

(57) **Abstract**

According to a liquid crystal panel 10 provided by the present invention, in the vicinity of an inner surface of a sealing portion 16 located on a peripheral portion 10a between a pair of substrates 11 and 12 in order to hold a liquid crystal layer 13 between the substrates 11 and 12, barrier portions 49 and 59 formed of a material for forming alignment films 48 and 58 are formed to be thicker than the alignment films 48 and 58.

## Description

### TECHNICAL FIELD

The present invention relates to a liquid crystal panel and a liquid crystal display device.

### BACKGROUND ART

Recently, liquid crystal display devices including a liquid crystal panel are in wide use as image display devices (displays) for TVs, personal computers and the like. Such a liquid crystal panel has a structure in which a liquid crystal material is confined between a pair of glass substrates (typically, an array substrate and a color filter (CF) substrate) which are bonded together with a sealant while having a prescribed gap therebetween and held as a liquid crystal layer. The sealant is located along a peripheral portion of the glass substrates so as to surround an active area (an effective display area, namely, a display screen) and thus forms a sealing portion of the liquid crystal panel in order to confine the liquid crystal material between the substrates.
On the glass substrates, an alignment film of a resin material (typically, polyimide) is formed in order to align liquid crystal molecules in the liquid crystal layer in a certain direction.

When a liquid crystal display device having such a structure is placed under severe high-temperature, high-humidity conditions, for example, in a high-temperature, high-humidity atmosphere having a temperature of 40°C to 50°C and a relative humidity of almost 100%, a moisture entrance preventing measure which is sufficient to prevent the moisture from entering the inside of the panel is necessary. For a liquid crystal panel of a liquid crystal display device, it is not preferable that moisture in the atmosphere crosses the sealing portion to enter the liquid crystal layer and further reaches the active area, because this may cause stain (fogging) which is uncomfortable to the viewer and reduce the display quality. Such an inconvenience is inferred to be caused because the ease of alignment of the liquid crystal molecules in the area entered by the moisture is lowered due to the reaction of the moisture and the material of the alignment film.

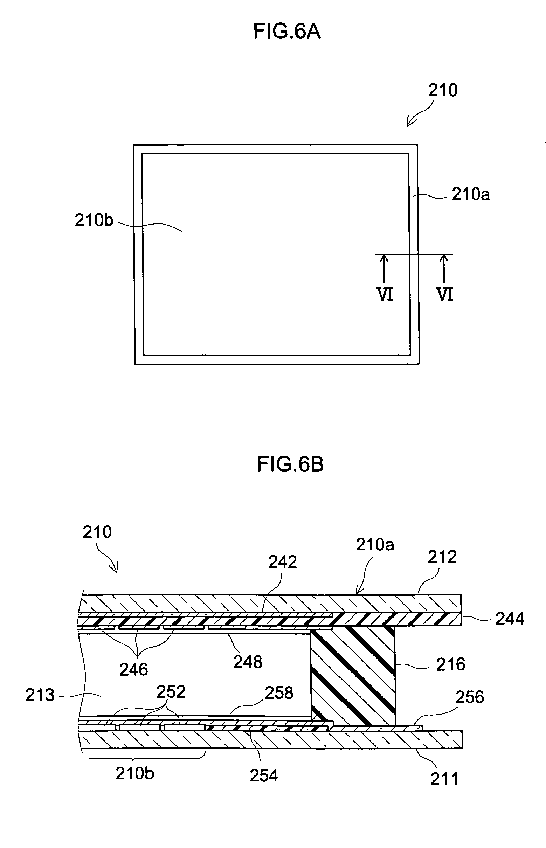

This will be described with reference to the drawings. FIG. 6A is a schematic plan view of a conventional liquid crystal panel 210. FIG. 6B is a cross-sectional view taken along line VI-VI of FIG. 6A, and is a schematic cross-sectional view showing a peripheral portion 210a of the conventional liquid crystal panel 210 (an area including a sealant (a sealing portion) 216, and the vicinity thereof, located between a pair of glass substrates 211 and 212 facing each other). In this example, the glass substrate 211 is a color filter (CF) substrate, and the glass substrate 212 is an array substrate. As shown in FIG. 6A and FIG. 6B, in the peripheral portion 210a of the conventional liquid crystal panel 210, moisture in an external atmosphere passes gaps between the sealing portion 216 and the glass substrates 211 and 212 and enters an area inner to the sealing portion 216. Such moisture may cross an area of a black matrix 254 adjacent to the sealing portion 216 and enter an active area 210b, in which pixel electrodes 246 and color filters 252 of three colors facing the pixel electrodes 246 are provided. This moisture may react with alignment films 248 and 258 respectively formed on surfaces of the glass substrates 211 and 212, the surfaces facing the liquid crystal layer 213. In the figure, reference character 242 represents a metal line, reference character 244 represents an insulating film, and reference character 256 represents a common electrode (transparent electrode).

For preventing the entrance of moisture into a gap between the substrates of the liquid crystal panel as described above, various techniques have been proposed. For example, Patent Document 1 proposes a technique for forming an alignment film in a pattern contacting the peripheral sealant (sealing portion). Patent Document 2 proposes a technique for providing a sealant between a convexed portion of a surface of an alignment film formed on one of a pair of substrates facing each other and a concaved portion of an alignment film formed on the other substrate, so that the liquid crystal layer between the substrates is confined.
However, with any the techniques described in Patent Documents 1 and 2, it is difficult to completely prevent the entrance of moisture into a gap between the substrates of a liquid crystal panel which is exposed to the above-described high-temperature, high-humidity atmosphere.

### CITATION LIST

### PATENT DOCUMENT

Patent Document 1: Japanese Patent Laid-Open Publication No. H7-230090
Patent Document 2: Japanese Patent Laid-Open Publication No. 2006-285001

### SUMMARY OF THE INVENTION

### TECHNICAL PROBLEM

The present invention, made in light of the above-described problems, has a main object of providing a liquid crystal panel which prevents the reduction in the display quality due to stain (fogging) or the like caused by the entrance of moisture into a gap between a pair of substrates even in the above-described high-temperature, high-humidity atmosphere. Another object of the present invention is to provide a liquid crystal display device including such a liquid crystal panel.

### SOLUTION TO THE PROBLEM

In order to achieve the above-described objects, a liquid crystal panel provided by the present invention includes a pair of substrates facing each other; a liquid crystal layer located between the pair of substrates; and a sealing portion located on a peripheral portion between the substrates so as to surround the liquid crystal layer in order to hold the liquid crystal layer between the pair of substrates. In the liquid crystal panel according to the present invention, an alignment film for aligning liquid crystal molecules in the liquid crystal layer is formed on a surface of at least one of the pair of substrates, the surface facing the liquid crystal layer. A barrier portion formed of an alignment film material for forming the alignment film is formed to be thicker than the alignment film, the barrier portion being formed in the vicinity of an inner surface of the sealing portion.
In a liquid crystal panel according to the present invention, the barrier portion is formed in the vicinity of the sealing portion in an area inner to the sealing portion. Owing to this, even if moisture in an external atmosphere passes gaps between the sealing portion and the substrates and enters an area inner to the sealing portion (i.e., enters the liquid crystal layer), the moisture (in other words, water molecules) can be trapped by the barrier portion. More specifically, such water molecules which have entered (H₂O molecules) are reacted with the molecules of the alignment film material (polymer compound) forming the barrier portion and so can be prevented from entering an area inner to the barrier portion. Preferably, a barrier portion having a volume capable of trapping all the amount of moisture which can enter the gap between the pair of substrates is provided. Owing to this, the moisture which can enter is reacted with (consumed by) the barrier portion, and so the entrance of the moisture can be inhibited by the barrier portion and the entrance of the moisture into an active area inner to the barrier portion can be effectively prevented.
Therefore, according to the liquid crystal panel of the present invention, even if moisture in an external atmosphere enters a gap between the pair of substrates of the liquid crystal panel, the display quality can be prevented from being reduced due to stain or the like which may be caused by the entrance of the moisture into the active area, with a high level of reliability.

In a preferable embodiment of the liquid crystal panel disclosed herein, a groove is formed along the inner surface of the sealing portion on the surface of the substrate which faces the liquid crystal layer; and the barrier portion is formed by the alignment film material being accumulated in the groove.
In the liquid crystal panel having such a structure, by accumulating the alignment film material in the groove formed along the inner surface of the sealing portion (sealant) (preferably such that the groove is inner to, and away from, the sealing portion by a prescribed distance), a barrier portion thicker than the alignment film can be easily formed. Therefore, according to the liquid crystal panel having such a structure, the moisture which has entered an area inner to the sealing portion can be sufficiently trapped by the thick barrier portion.

In another preferable embodiment of the liquid crystal panel disclosed herein, the alignment film material is polyimide.
According to the liquid crystal panel having such a structure, polyimide forming the barrier portion can be easily reacted with moisture (H₂O molecules), and so the moisture which has entered can be trapped efficiently. Therefore, the reduction in the display quality by the entrance of the moisture can be prevented with a higher level of reliability.

In still another preferable embodiment of the liquid crystal panel disclosed herein, the alignment film and the barrier portion are formed of the alignment film material, continuously and integrally with each other on a surface of at least one of the pair of substrates.
In the liquid crystal panel having such a structure, by providing the alignment film material on the surface of the substrate by means of a conventional alignment film formation process (e.g., an alignment film formation process by an inkjet technique), the alignment film and the barrier portion are integrally formed. Therefore, the entrance of the moisture can be prevented and the display quality can be maintained, while the complication of the production process and the increase of the production cost due to the formation of the barrier portion are suppressed.

In still another preferable embodiment of the liquid crystal panel disclosed herein, an outer borderline of the barrier portion is formed linearly in substantially the entirety of a periphery of the panel.
By forming the outer borderline of the barrier portion (i.e., the end of the barrier portion on the outer side of the panel in the width direction) to be linear in the entire periphery of the panel, the capability of inhibiting the entrance of moisture (moisture trapping capability of the barrier portion) can be made approximately uniform in the entire periphery of the panel. Therefore, according to the liquid crystal panel having such a structure, the entrance of the moisture can be inhibited stably in the entirety of the panel with no nonuniformity.

According to another aspect, the present invention also provides a liquid crystal display device including any of the liquid crystal panels disclosed herein.
Such a liquid crystal display device includes a liquid crystal panel as described above. Therefore, even if moisture in an external atmosphere enters a gap between the pair of substrates of the liquid crystal panel, the reduction in the display quality which may be caused by the entrance of the moisture can be effectively prevented.

### BRIEF DESCRIPTION OF THE DRAWINGS

[FIG. 1] FIG. 1 is an exploded perspective view schematically showing a structure of a liquid crystal display device including a liquid crystal panel according to an embodiment of the present invention.
[FIG. 2] FIG. 2 is a cross-sectional view schematically showing the structure of the liquid crystal display device including the liquid crystal panel according to the embodiment.
[FIG. 3] FIG. 3 is a cross-sectional view schematically showing a peripheral portion of the liquid crystal panel according to the embodiment.
[FIG. 4A] FIG. 4A is a cross-sectional view schematically showing a peripheral portion of an array substrate according to the embodiment.
[FIG. 4B] FIG. 4B is a plan view schematically showing the peripheral portion of the array substrate according to the embodiment.
[FIG. 5A] FIG. 5A is a cross-sectional view schematically showing a peripheral portion of a conventional array substrate.
[FIG. 5B] FIG. 5B is a plan view schematically showing the peripheral portion of the conventional array substrate.
[FIG. 6A] FIG. 6A is a plan view schematically showing a conventional liquid crystal panel.
[FIG. 6B] FIG. 6B is a cross-sectional view taken along line VI-VI of FIG. 6A.

### DESCRIPTION OF EMBODIMENTS

Hereinafter, some preferable embodiments of the present invention will be described with reference to the drawings. Elements which are other than the elements specifically described in this specification (e.g., the structure of an area including the sealing portion and the vicinity thereof) but are necessary to carry out the present invention (e.g., the method for constructing substrates included in the liquid crystal panel, the structure of a light source included in the liquid crystal display device, the electrical circuit used by the driving system of the light source, etc.) may be understood as being the matter of design choice determined by a person of ordinary skill in the art based on the conventional art. The present invention can be carried out based on the contents disclosed in this specification and the technological common knowledge in the art.

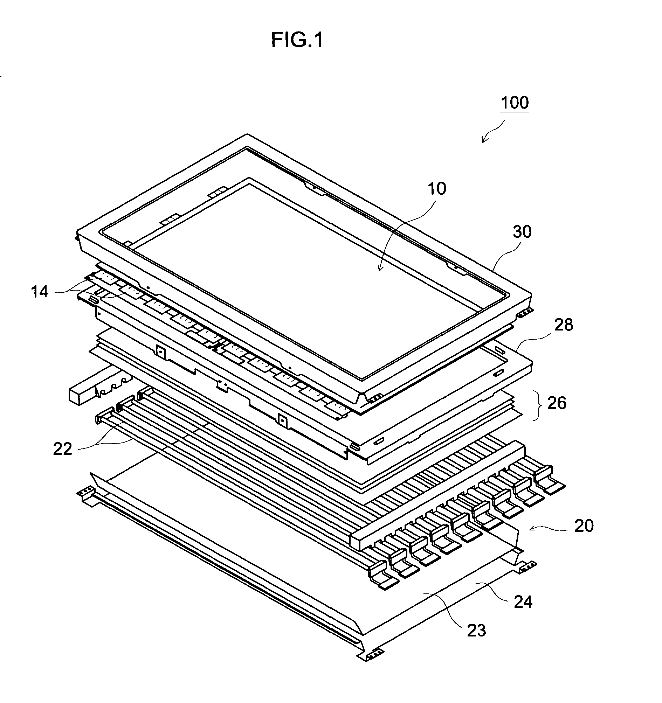

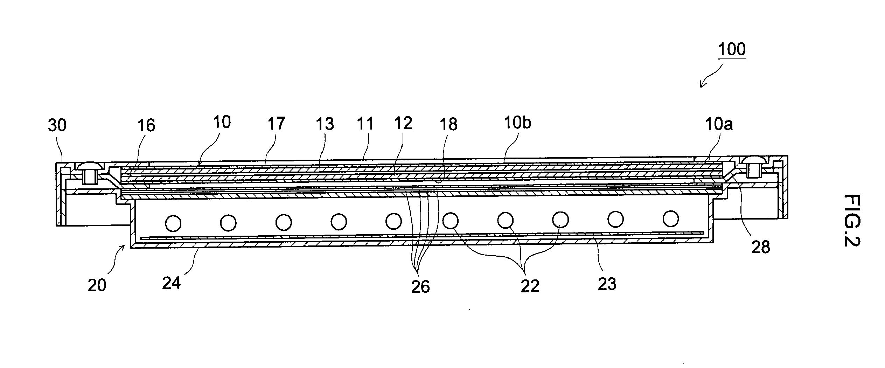

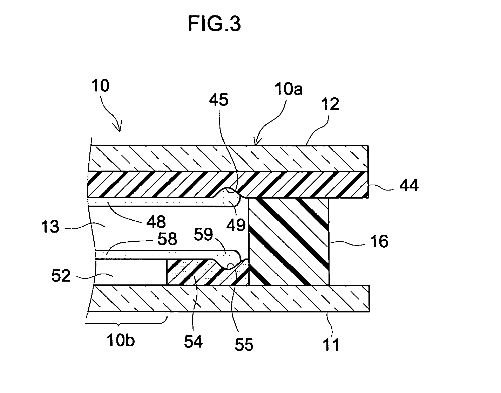

Hereinafter, with reference to FIG. 1 through FIG. 3, a liquid crystal display device 100 of an active matrix system (TFT type) including a liquid crystal panel 10 according to one preferable embodiment of the present invention will be described. FIG. 1 is an exploded perspective view schematically showing a structure of the liquid crystal display device 100 including the liquid crystal panel 10 according to this embodiment. FIG. 2 is a cross-sectional view schematically showing the structure of the liquid crystal display device 100 including the liquid crystal panel 10 according to this embodiment. FIG. 3 is a cross-sectional view schematically showing a peripheral portion 10a of the liquid crystal panel 10 according to this embodiment.
In the figures referred to below, members or portions having the same functions may bear the same reference characters and descriptions thereof may not be repeated or may be simplified. In the figures, the relative sizes (length, width, thickness, etc.) do not necessarily reflect the actual relative sizes accurately. In the following description, the "front side" means the side of the liquid crystal display device 100 facing the viewer (i.e., the liquid crystal panel side), and the "rear side" means the side of the liquid crystal display device 100 not facing the viewer (i.e., the backlight device side).

With reference to FIG. 1 and FIG. 2, the structure of the liquid crystal display device 100 will be described. As shown in FIG. 1, the liquid crystal display device 100 includes the liquid crystal panel 10 and a backlight device 20, which is an external light source provided on the rear side of the liquid crystal panel 10 (lower side in FIG. 1). The liquid crystal panel 10 and the backlight device 20 are integrally held by being assembled by a bezel 30 or the like.

As shown in FIG. 1 and FIG. 2, the backlight device 20 includes a plurality of linear light sources (e.g., fluorescent tubes, typically, cold-cathode fluorescent tubes) 22 and a case (chassis) 24 for accommodating the light sources 22. The case 24 has a shape of box opened toward the front side. The light sources 22 are arranged parallel to each other in the case 24, and a reflective member 23 for reflecting light from the light sources 22 toward the viewer's side efficiently is provided between the case 24 and the light sources 22.

In the opening of the case 24, a plurality of sheet-like optical members 26 are stacked and located so as to cover the opening. The optical members 26 are, for example, a diffuser, a diffusion sheet, a lens sheet and a luminance increasing sheet which are located from the backlight device 20 side sequentially in this order. The optical members 26 are not limited to being this combination of elements or being located in this order. The case 24 is further provided with a frame 28 having a generally frame-like shape in order to hold the optical members 26 in the state where the optical members 26 are fit into the case 24.
On the rear side of the case 24, an inverter circuit substrate (not shown) on which an inverter circuit is mounted and an inverter transducer (not shown) as a booster circuit for supplying power to each of the light sources 22 are provided, but these elements do not characterize the present invention and so will not be described.

Now, the liquid crystal panel 10 will be described.
As shown in FIG. 1 through FIG. 3, the liquid crystal panel 10 has a generally rectangular overall shape, and has a sandwich structure including a pair of light-transmissive glass substrates 11 and 12 facing each other and a liquid crystal layer 13 confined therebetween. As each of the substrates 11 and 12, a substrate cut from a large mother member called "mother glass" during a production process thereof is used. Among the pair of substrates 11 and 12, the substrate on the front side is a color filter substrate (CF substrate) 11, and the substrate on the rear side is an array substrate 12. The liquid crystal layer 13 is formed of a liquid crystal material, optical characteristics of which change when an electric field is applied between the substrates 11 and 12. On a peripheral portion of each of the substrates 11 and 12 (the peripheral portion 10a of the liquid crystal panel 10), a sealant formed of an appropriate material (e.g., a thermosetting resin or a photocurable resin) is provided, so that a sealing portion 16 surrounds, and thus confines, the liquid crystal layer 13. A gap between the substrate 11 and the substrate 12 is securely kept by the sealing portion 16 and particle-shaped spacers not shown (typically, formed of an elastically deformable resin; and a great number of spacers are located in a dispersed state). On surfaces of the substrates 11 and 12 which do not face each other (outer surfaces), polarizer plates 17 and 18 are respectively bonded.

The liquid crystal panel 10 according to this embodiment has substantially the same structure as that of the conventional liquid crystal panel 210 shown in FIG. 6B except for alignment films 48 and 58 and barrier portions 49 and 59 described later. More specifically, although not shown in FIG. 1 through FIG. 3, on an inner side of the array substrate 12 (the side facing the liquid crystal layer 13), an array of pixels for displaying images is formed and a plurality of source lines and a plurality of gate lines (corresponding to the metal line 242 in FIG. 6B) for driving each of the pixels (sub pixels) are formed in a grid pattern. Again, although not shown in FIG. 1 through FIG. 3, in each of the grid pattern areas surrounded by the source and gate lines, a switching element (e.g., a thin film transistor (TFT)) and a (sub) pixel electrode as a transparent electrode (the pixel electrode 246 in FIG. 6B) are provided. Typically, the pixel electrode is formed of ITO (Indium Tin Oxide) and has a lengthy rectangular shape.
The source and gate lines are connected to external circuits (driver ICs) 14 (see FIG. 1) which can supply image signals and the like.

As shown in FIG. 3, on a surface of the array substrate 12 (in more detail, a surface of the metal lines not shown), an insulating film 44 (insulating film 244 in FIG. 6B) is formed. On the insulating film 44, the above-described pixel electrodes (transparent electrodes) not shown are formed. On the transparent electrodes, the alignment film 48 is formed.

As shown in FIG. 3, on the CF substrate 11, the following elements are provided: color filters 52 of three colors of R (red), G (green) and B (blue) which are located at positions corresponding to the respective pixel electrodes provided on the array substrate 12 (corresponding to the color filters 252 in FIG. 6B), a black matrix (light-blocking film) 54 for partitioning the filters 52 of these colors from each other, and a common electrode (corresponding to the common electrode 256 in FIG. 6B) which is a transparent electrode (not shown) uniformly formed on a surface of the black matrix 54 and the color filters 52. The active area 10b corresponding to the area in which the pixel electrodes and the color filters 52 are provided is an area which can display an image (effective display area). The formation of the pixels, the wiring of the electrodes, and the like described above may be performed in substantially the same manner as that for producing a conventional liquid crystal panel and do not characterize the present invention, and so will not be described in more detail.

Now, with reference to FIG. 3, the alignment films 48 and 58 according to this embodiment will be described. As described above, FIG. 3 does not show the transparent electrodes or metal lines (source lines and gate lines) provided on the array substrate 12 for the sake of simplification. Similarly, FIG. 3 does not show the common electrode provided on the CF substrate 11.
As shown in FIG. 3, on the array substrate 12, the insulating film 44 is formed like in a general array substrate (e.g., the array substrate 212 shown in FIG. 6B). In this insulating film 44, a groove 45 (typically, linear) is formed in the vicinity of an inner surface of the sealing portion 16, more specifically, formed so as to be along an inner wall of the sealing portion 16.
On the insulating film 44, the alignment film 48 having a prescribed thickness (typically, several tens of nanometers) is formed. The alignment film 48 faces the liquid crystal layer 13. An end of the alignment film 48 reaches the inside of the groove 45, and at this end, a barrier portion 49 thicker than the alignment film 48 is formed. Namely, the barrier portion 49 is formed to be thicker than the above-mentioned prescribed thickness as a result of a material of the alignment film being accumulated in the groove 45, and is continued to, and integrated with, the alignment film 48.

On the CF substrate 11, the color filters 52 of three colors of R, G and B and the black matrix 54 surrounding an outer periphery of the color filters 52 are formed like on a general CF substrate (e.g., the CF substrate 211 shown in FIG. 6B). As shown in FIG. 3, on the peripheral portion of the CF substrate 11, the sealing portion 16 is adjacent to, and outer to, the black matrix 54. In the black matrix 54 (precisely, in the black matrix 54 and the common electrode formed thereon) on this peripheral portion, a groove 55 (typically, linear) is formed in the vicinity of the inner surface of the sealing portion 16, more specifically, formed so as to be along the inner wall of the sealing portion 16. On the color filters 52 and the black matrix 54 (precisely, on a surface of the common electrode formed on the color filters 52 and the black matrix 54), the alignment film 58 having a prescribed thickness is formed like the alignment film 48 on the array substrate 12. The alignment film 58 is on the liquid crystal layer 13 so as to face the alignment film 48. An end of the alignment film 58 reaches the inside of the groove 55, and at this end, a barrier portion 59 thicker than the alignment film 58 is formed integrally with the alignment film 58.

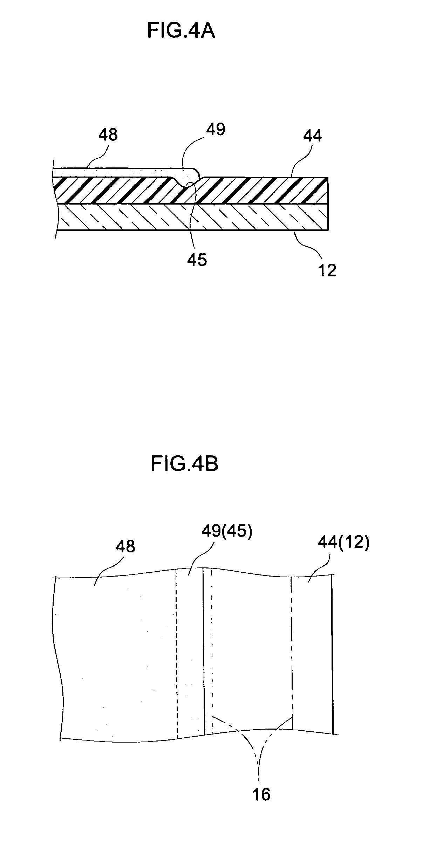

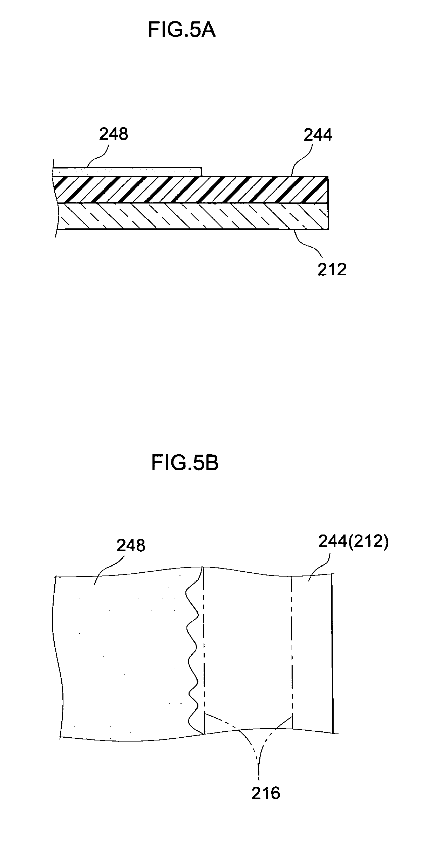

Now, an example of method for producing the liquid crystal panel 10 according to this embodiment will be described with reference to the drawings. FIG. 4A is a cross-sectional view schematically showing the peripheral portion of the array substrate 12 (the peripheral portion 10a of the liquid crystal panel 10) according to this embodiment. FIG. 4B is a plan view schematically showing the peripheral portion of the array substrate 12 (the peripheral portion 10a of the liquid crystal panel 10) according to this embodiment. FIG. 5A is a cross-sectional view schematically showing a peripheral portion of the array substrate 212 of the conventional liquid crystal panel 210. FIG. 5B is a plan view schematically showing the peripheral portion of the array substrate 212 of the conventional liquid crystal panel 210. FIG. 4A does not show the metal lines or the pixel electrodes (transparent electrodes). Similarly, FIG. 5A does not show the metal lines 242 or the pixel electrodes (transparent electrodes) 246.
As a preferable technique for forming an array of TFTs on the glass substrate and thus producing the array substrate 12, photolithography is adopted. According to this technique, first, a metal film for gate lines (gate electrodes) is formed on a surface of one substrate, and a photosensitive agent (resist) is applied thereon. On the resist, a mask having a pattern of an electronic circuit is placed (mask alignment), and light (typically, ultraviolet) is directed thereto from above for exposure. Then, the exposed glass substrate is developed, and etching is performed in accordance with the pattern formed by the development. Thus, the gate electrodes are formed. The insulating film 44 to be formed on the gate electrodes (in this example, the insulating film 44 includes a gate insulating film, a surface protection film (passivation film) and an organic insulating film), and also the source lines, the transparent electrodes and the like not shown, are sequentially formed (stacked) on the gate electrodes by repeating substantially the same technique as used for forming the gate electrodes.
During the production of the array substrate 12 conducted using such a technique, patterning is conducted such that a groove-like hollow is formed at a prescribed position which may be in the vicinity of the inner surface of the sealing portion 16. In this manner, the groove 45 can be easily formed on the insulating film 44 (precisely, on the transparent electrodes thereon).
In the manner described above, the array substrate 12 before the formation of the alignment film 48 is obtained.

As a technique for forming the alignment film 48 on the insulating film 44 having the groove 45, an inkjet technique can be preferably used. First, a material for forming the alignment film is prepared. Such an alignment film material may be substantially the same as the conventional alignment film material. Examples of such an alignment film material include polymer materials such as polyvinyl alcohol (PVA), polyamide, polyimide, polyimideamide and the like, and preferably polyimide materials. Among the polyimide materials, materials having a molecular structure which has less crosslinking and is highly linear and symmetrical, and also having a high imidization ratio, are more preferable because such materials are highly easy to be aligned.
Next, the above-mentioned alignment film material is mounted on an inkjet device. For example, while an inkjet head having a plurality of nozzles arranged at a prescribed pitch is relatively moved, the alignment film material is provided (jetted) from each nozzle toward the array substrate 12. The alignment film material jetted in dots, once attached to the array substrate 12, expands such that dots adjacent to each other partially overlap. As a result, the alignment film material uniformly expands on the array substrate 12 to form a film. In this step, the alignment film material is jetted so as to be accumulated in the groove 45. It is preferable, however, that the alignment film material is jetted so as not to go over an outer edge of the groove 45 (i.e., the edge on the sealing portion 16 side). A surface of the film formed on the array substrate 12 in this manner is subjected to rubbing treatment (e.g., treatment of rubbing the film with cloth in a prescribed direction) for controlling the alignment of the liquid crystal molecules. Thus, the alignment film 48 is formed. There is no specific limitation on whether rubbing treatment is necessary or not. In the case where the liquid crystal panel 10 according to this embodiment is a panel classified as, for example, a VA (Vertical Alignment) mode panel which uses a vertical alignment film, the above-mentioned rubbing treatment is not necessary.

Regarding the alignment film 48 formed on the array substrate 12 as described above, as shown in FIG. 4A, the barrier portion 49 made thicker than the rest of the area, as a result of the alignment film material being accumulated in the groove 45 formed on the array substrate 12, is formed to be continued to, and integral with, the alignment film 48. As shown in FIG. 4B, the (outer) end of the barrier portion 49, namely, the outer borderline is within the groove 45 so as to be linear along the groove 45 without going to an area outer to the groove 45, along substantially the entire periphery of the panel 10. Therefore, the barrier portion 49 is away from the sealing portion 16 by a prescribed distance (i.e., the distance between the inner wall of the sealing portion 16 and the groove 45) along substantially the entire periphery of the panel 10. This certainly avoids the barrier portion 49 from contacting the sealing portion 16. In FIG. 4B, the two-dot chain line represents the area where the sealing portion 16 may be located.

Next, as a preferable technique for producing the CF substrate 11 according to this embodiment, photolithography can be adopted like for the array substrate 12. According to this technique, first, the black matrix 54 (see FIG. 3), which is to be a frame surrounding the color filters 52 of each color, is formed in a grid pattern on the glass substrate by, typically, photolithography. Then, for example, an R (red) pigment-dispersed resist (a resist material obtained by dispersing a red pigment in a transparent resin) is uniformly applied on the glass substrate having the black matrix 54 formed thereon, and then mask alignment and exposure are performed to print a pattern of the R color filter. Next, development is performed to form R sub pixels (color filters) in a prescribed pattern. The G (green) and B (blue) color filters are formed in substantially the same manner. Then, a conductive film (typically, ITO film), which is to be a transparent electrode (common electrode), is formed on the color filters 52 and the black matrix 54 by, for example, sputtering, photolithography or the like. In this manner, the CF substrate 11 before the formation of the alignment film 58 is obtained.

In the case where the groove 55 (see FIG. 3) is to be formed on the peripheral portion of the CF substrate 11, more specifically, in the vicinity of the inner edge of an area where the sealing portion 16 is to be provided, a photomask having a pattern of the groove 55 is used for forming the black matrix 54 on the glass substrate. Thus, a hollow corresponding to the groove 55 can be formed easily in the black matrix 54. Next, a conductive film material (typically, ITO) is provided in such an amount that does not fill the hollow, thus to form a transparent electrode film. Thus, the groove 55 is formed.

A method for forming the alignment film 58 on the CF substrate 11 having the groove 55 may be substantially the same as the method for forming the alignment film 48 on the array substrate 12. Regarding the alignment film 58 formed on the CF substrate 11 by this method, the barrier portion 59 made thicker than the rest of the area, as a result of the alignment film material being accumulated in the groove 55, is formed to be continued to, and integral with, the alignment film 58. The (outer) end of the barrier portion 59, namely, the outer borderline is within the groove 55 so as to be linear along the groove 55 without going to an area outer to the groove 55, along substantially the entire periphery of the panel 10. Therefore, like the barrier portion 49, the barrier portion 59 is away from the sealing portion 16 and is avoided from contacting the sealing portion 16.

Next, the array substrate 12 having the alignment film 48 and the barrier portion 49 formed thereon and the CF substrate 11 having the alignment film 58 and the barrier portion 59 formed thereon are bonded together (see FIG. 3). More specifically, a sealant (a sealing adhesive formed of, for example, a thermosetting resin or an ultraviolet-curable resin) is provided so as to surround the peripheral portion of the array substrate 12, thus to form the sealing portion 16. Next, spacers (not shown) are scattered for forming a gap between the array substrate 12 and the CF substrate 11. Then, the CF substrate 11 is put on the array substrate 12 such that the surfaces thereof having the alignment films 48 and 58 face each other, and the CF substrate 11 and the array substrate 12 are bonded together.
Next, the substrates 11 and 12 bonded together as above are kept vacuum, and a liquid crystal material is injected into the gap between the substrates by means of capillary action. After the gap is filled with the liquid crystal material, the injection opening is sealed. Finally, the polarizer plates 17 and 18 (see FIG. 2) are bonded on the surfaces of the substrates 11 and 12 which do not face each other. Thus, the liquid crystal panel 10 is completed.

The barrier portions 49 and 59 formed at the ends of the alignment films 48 and 58 on the pair of substrates 11 and 12, integrally with alignment films 48 and 58, exhibit the following effects. First, as shown in FIG. 3, even if the liquid crystal panel 10 including such substrates 11 and 12 are exposed to a severe high-temperature, high-humidity atmosphere and moisture in an external atmosphere enters an area inner to the sealing portion 16 (i.e., enters the liquid crystal layer 13), water molecules in such moisture are reacted with the molecules of the alignment film material used to form the barrier portions 49 and 59 and so trapped. Thus, the moisture is prevented from entering an area inner to the barrier portions 49 and 59. Regarding the size (thickness) of the barrier portions 49 and 59, it is preferable that the barrier portions 49 and 59 have a volume corresponding to at least an amount with which all the amount of moisture which has entered can be reacted (trapped). Owing to this, the barrier portions 49 and 59 inhibit the entrance of the moisture and can effectively prevent the entrance of the moisture into the active area 10b. It is preferable that the grooves 45 and 55 are formed with the width and the depth thereof being adjusted so that the barrier portions 49 and 59 are formed to have a preferable size.
Since the barrier portions 49 and 59 and the sealing portion 16 are away from each other, the moisture can be prevented from directly contacting the barrier portions 49 and 59 via the sealing portion 16. Owing to this, the moisture can be suppressed from reacting with the barrier portions 49 and 59. This can prevent the entrance of the moisture more effectively.

The conventional liquid crystal panel 210 will be described based on the array substrate 212 shown in FIG. 5A. As shown in FIG. 5A, the array substrate 212 does not have a hollow such as the groove 45 mentioned above, and the panel 210 does not include a thick barrier portion formed of an alignment film material. Therefore, when the liquid crystal panel 210 is exposed to a high-temperature, high-humidity atmosphere as described above, the liquid crystal panel 210 does not have a portion for trapping the moisture which has entered an area inner to the sealing portion 216 and so cannot inhibit the entrance of the moisture into a part of the alignment film 248 which is in the vicinity of the sealing portion 216 (and also into a part of the alignment film 248 which is in the active area 210b). Since a hollow such as the groove 45 is not formed, when the alignment film material for forming the alignment film 248 is provided on the array substrate 212 (typically, by an inkjet technique), it is difficult to control an end of the film to be straight and to be away from the sealing portion 216 along the entire periphery of the panel. Therefore, as shown in FIG. 5B, a part of the alignment film 248 formed of the provided alignment film material (precisely, the film obtained by applying the alignment film material) may undesirably contact the sealing portion 216. Contact of the alignment film 248 and the sealing portion 216 can promote the entrance of the moisture in the external atmosphere and so is not preferable. In FIG. 5B, the two-dot chain line represents the area where the sealing portion 216 may be located. The CF substrate 211 (see FIG. 6B) cannot inhibit the entrance of the moisture, like the array substrate 212.

As described above, in the liquid crystal panel 10 according to this embodiment, even if moisture in an external high-temperature, high-humidity atmosphere enters the inside of the panel 10, the moisture is trapped in the vicinity of an inner surface of the sealing portion 16 by the barrier portions 49 and 59 respectively provided on the substrates 11 and 12 facing each other, and so is avoided from entering the active area 10b which is inner to the barrier portions 49 and 59. Accordingly, such a liquid crystal panel 10 prevents the reduction in the display quality due to stain (fogging) or the like in the active area 10b which may be caused by the reaction of the alignment film material and the moisture. Thus, a liquid crystal panel providing a high quality can be realized.

So far, the present invention has been described by way of a preferable embodiment. The above description does not limit the present invention, and various modifications are possible, needless to say. For example, the above embodiment has a structure in which the grooves 45 and 55 are provided in the vicinity of the inner surface of the sealing portion 16 in order to form the barrier portions 49 and 59 thicker than the alignment films 48 and 58. In a modification, instead of the grooves 45 and 55 being formed, a barrier portion provided on at least one of the substrates may be protruded like a bump (or like a wall) toward the other substrate facing the one substrate, thus to provide a barrier thicker than the alignment film.

### DESCRIPTION OF REFERENCE CHARACTERS

- 10: Liquid crystal panel
- 10a: Peripheral portion
- 10b: Active area
- 11: Color filter (CF) substrate
- 12: Array substrate
- 13: Liquid crystal layer
- 14: External circuit
- 16: Sealing portion
- 17, 18: Polarizer plate
- 20: Backlight device
- 22: Light source
- 24: Case
- 26: Optical member
- 28: Frame
- 30: Bezel
- 44: Insulating film
- 45: Groove
- 48: Alignment film
- 49: Barrier portion
- 52: Color filter
- 54: Black matrix
- 55: Groove
- 58: Alignment film
- 59: Barrier portion
- 100: Liquid crystal display device

## Claims

1. A liquid crystal panel, comprising:
a pair of substrates facing each other;
a liquid crystal layer located between the pair of substrates; and
a sealing portion located on a peripheral portion between the substrates so as to surround the liquid crystal layer in order to hold the liquid crystal layer between the pair of substrates;
wherein:
an alignment film for aligning liquid crystal molecules in the liquid crystal layer is formed on a surface of at least one of the pair of substrates, the surface facing the liquid crystal layer; and
a barrier portion formed of an alignment film material for forming the alignment film is formed to be thicker than the alignment film, the barrier portion being formed in the vicinity of an inner surface of the sealing portion.

2. The liquid crystal panel of claim 1, wherein:
a groove is formed along the inner surface of the sealing portion on the surface of the substrate which faces the liquid crystal layer; and
the barrier portion is formed by the alignment film material being accumulated in the groove.

3. The liquid crystal panel of claim 1 or 2, wherein the alignment film material is polyimide.

4. The liquid crystal panel of any one of claims 1 through 3, wherein the alignment film and the barrier portion are formed of the alignment film material, continuously and integrally with each other on a surface of at least one of the pair of substrates.

5. The liquid crystal panel of any one of claims 1 through 4, wherein an outer borderline of the barrier portion is formed linearly in substantially the entirety of a periphery of the panel.

6. A liquid crystal display device, comprising the liquid crystal panel of any one of claims 1 through 5.
